# EUROPEAN PATENT APPLICATION

(11) **EP 2 818 677 A1**
(43) Date of publication of application: **31.12.2014**
(21) Application number: 13751644.9
(22) Date of filing: 22.02.2013
(51) Int. Cl.: F02F 1/24, F01L 3/02, F02B 23/00, F02B 77/11, F02F 1/00, F02F 3/10, F16J 1/01

(54) **ENGINE COMBUSTION CHAMBER STRUCTURE AND INNER WALL STRUCTUREOF FLOW PATH**

(30) Priority: 22.02.2012 US 201261601700 P; 16.05.2012 JP 2012112117
(71) Applicant: NGK Insulators, Ltd., Nagoya-shi, Aichi 467-8530 (JP)
(72) Inventor: TOMITA, Takahiro, Nagoya-shi Aichi 467-8530 (JP); ICHIMURA, Mikiya, Nagoya-shi Aichi 467-8530 (JP); HASHIMOTO, Shigeharu, Yokohama-shi Kanagawa 224-0007 (JP)
(74) Representative: Teipel, Stephan
(86) International application number: PCT/JP2013/054605
(87) International publication number: WO 2013/125704

(57) **Abstract**

There is provided a structure of a combustion chamber for an engine which enhances a thermal efficiency of the engine to enhance a fuel efficiency, and an inner wall structure of a flow path through which an intake gas or an exhaust gas of the engine flows. The structure of the combustion chamber for the engine includes a heat-insulating member 1 including a heat-insulating layer 3 formed on the surface of an engine constituting member 21 constituting the combustion chamber for the engine and a dense surface layer 2 formed on the surface of the heat-insulating layer 3. Furthermore, the heat-insulating layer 3 includes ceramic and/or glass, and has pores of pore diameters of 10 to 500 nm and a porosity of 10 to 99%, and the dense surface layer 2 includes ceramic and/or glass and has a porosity of 5% or less.

## Description

### Technical Field

The present invention relates to a structure of a combustion chamber for an engine which enhances a thermal efficiency of the engine to enhance fuel efficiency. In particular, the present invention relates to a structure of a combustion chamber for an engine which is focused on heat transfer by radiation from combustion flame of a fuel to an inner wall constituting the combustion chamber for the engine. Furthermore, the present invention relates to an inner wall structure of a flow path through which an intake gas or an exhaust gas of an engine flows, as a member constituting a car.

### Background Art

It has been desired that a thermal efficiency of an engine is enhanced to enhance fuel efficiency. In Patent Document 1, an internal combustion engine is disclosed in which a followability of a temperature of a wall surface of a combustion chamber to a gas temperature in a cylinder is enhanced to enhance the thermal efficiency. In the internal combustion engine of Patent Document 1, a heat-insulating thin membrane formed on the wall surface facing the inside of the combustion chamber in a base material forming the combustion chamber includes a first heat-insulating material and a second heat-insulating material. The second heat-insulating material has a heat conductivity equal to or less than the base material. The first heat-insulating material has a lower heat conductivity and a smaller heat capacity per unit volume than the base material, and further has a lower heat conductivity and a smaller heat capacity per unit volume than the second heat-insulating material. The first heat-insulating material having the lower heat conductivity and smaller heat capacity per unit volume is mixed in the second heat-insulating material having a high heat resistance and a high strength, so that it is possible to protect the first heat-insulating material from a high-temperature and highpressure combustion gas in the combustion chamber.

In Patent Document 2, there is disclosed an internal combustion engine including a structural member in which a heat-insulating performance is enhanced. In the internal combustion engine of Patent Document 2, it is constituted such that a heat-insulating material is disposed adjacent to an inner wall of an exhaust passage, and a high-temperature working gas (an exhaust gas) flows along a flow path formed by the heat-insulating material. The heat-insulating material is formed by laminating MSS (mesoporous spherical silica) particles having an average particle diameter of 0.1 to 3 µm in a state where the respective particles are densely bonded to one another via a bonding material. In the MSS particles, mesopores having an average pore diameter of 1 to 10 nm are countlessly formed.

In Patent Document 3, there is disclosed a coating membrane which has a high surface hardness and can be prevented from being damaged. The coating membrane is formed by dispersing hollow particles made of silica shells in a binder. By a wear resistance and the high hardness of the hollow particles made of the silica shells, the wear resistance of a substrate on which the coating membrane is formed can be enhanced. Furthermore, flame-retardant properties can be enhanced by heat-insulating properties of the hollow particles made of the silica shells.

### Citation List

### Patent Documents

[Patent Document 1] WO 2009/020206
[Patent Document 2] JP-A-2011-052630
[Patent Document 3] JP-A-2008-200922

### Summary of the Invention

### Problem to be Solved by the Invention

In an internal combustion engine of Patent Document 1, a heat-insulating thin membrane of a material other than metal (a metal oxide mainly composed of ceramic or the like) is formed on a base material made of the metal (an inner wall surface of an engine combustion chamber), but during actual use, peeling due to heat stress in an interface between both the materials occurs, or deterioration of the interface due to an interaction and the peeling due to the deterioration occur. Furthermore, there is a possibility that thermal properties of the heat-insulating membrane deteriorate due to the interaction.

In the internal combustion engine of Patent Document 2, similarly to Patent Document 1, during the actual use, the peeling due to the heat stress in the interface between both the materials occurs, or the deterioration of the interface due to the interaction and the peeling due to the deterioration occur. Furthermore, there is a possibility that the thermal properties of the heat-insulating membrane deteriorate due to the interaction. Furthermore, it is considered that a process for producing a spherical porous material of Patent Document 2 is laborious and that cost of a raw material is not low, which causes the possibility that cost of a heat-insulating material using this raw material is high.

In a coating membrane of Patent Document 3, the surface of a substrate can have flame-retardant properties due to the heat-insulating properties of the coating membrane, but when the coating membrane is used for a long period of time while being exposed to such a heat cycle as in an engine combustion chamber, a sufficient durability is not obtained.

A problem of the present invention is to provide a structure of a combustion chamber for an engine which enhances a thermal efficiency of an engine to enhance a fuel efficiency, and an inner wall structure of a flow path through which an intake gas or an exhaust gas of the engine flows.

### Means for Solving the Problem

The present inventors have found that the above problem can be solved by forming, on an engine constituting member, a heat-insulating layer having pore diameters and a porosity in predetermined ranges, a dense surface layer having a porosity in a predetermined range, and the like. That is, according to the present invention, there are provided the following structure of a combustion chamber for an engine, and an inner wall structure of a flow path through which an intake gas or an exhaust gas of the engine flows.
[1] A structure of a combustion chamber for an engine, including a heat-insulating layer formed on the surface of an engine constituting member constituting the combustion chamber for the engine, and a dense surface layer formed on the surface of the heat-insulating layer, wherein the heat-insulating layer includes ceramic and/or glass, and has pores of pore diameters of 10 to 500 nm and a porosity of 10 to 99%, and the dense surface layer includes ceramic and/or glass and has a porosity of 5% or less.
[2] The structure of the combustion chamber for the engine according to the above [1], wherein the heat-insulating layer is a composite material including ceramic and/or glass as a matrix and hollow particles and/or porous particles as fillers, or a porous body made of a single material.
[3] The structure of the combustion chamber for the engine according to the above [2], wherein when the heat-insulating layer is made of the composite material, the heat-insulating layer includes hollow particles and/or porous particles having pores of pore diameters of 10 to 500 nm.
[4] The structure of the combustion chamber for the engine according to the above [3], wherein a porosity of the hollow particles and/or the porous particles is from 30 to 99%, and a porosity of the matrix of the heat-insulating layer is from 0 to 70%.
[5] The structure of the combustion chamber for the engine according to the above [2], wherein when the heat-insulating layer is the porous body made of the single material, the porous body has a porosity of 10 to 99% and pore diameters of 500 nm or less.
[6] The structure of the combustion chamber for the engine according to any one of the above [1] to [5], wherein the heat-insulating layer has a thickness of 1 µm to 2 mm.
[7] The structure of the combustion chamber for the engine according to any one of the above [1] to [6], wherein the heat-insulating layer has a heat capacity of 1500 kJ/(m³·K) or less.
[8] The structure of the combustion chamber for the engine according to any one of the above [1] to [7], wherein the heat-insulating layer has a heat conductivity of 3 W/(m·K) or less.
[9] The structure of the combustion chamber for the engine according to any one of the above [1] to [8], wherein in the dense surface layer, a reflectance at a wavelength of 2 µm is larger than 0.5.
[10] The structure of the combustion chamber for the engine according to any one of the above [1] to [9], wherein in the dense surface layer, a radiation rate at a wavelength of 2.5 µm is larger than 0.5.
[11] The structure of the combustion chamber for the engine according to any one of the above [1] to [10], wherein the dense surface layer has a thickness of 10 nm to 100 µm.
[12] The structure of the combustion chamber for the engine according to any one of the above [1] to [11], which includes a buffer bonding layer having a smaller thickness than the heat-insulating layer, between the engine constituting member and the heat-insulating layer and/or between the heat-insulating layer and the dense surface layer.
[13] The structure of the combustion chamber for the engine according to the above [12], wherein the buffer bonding layer has a larger thermal expansion coefficient than one of two adjacent layers and has a smaller thermal expansion coefficient than the other adjacent layer.
[14] The structure of the combustion chamber for the engine according to the above [12] or [13], wherein the buffer bonding layer has a smaller Young's modulus than the two adjacent layers.
[15] The structure of the combustion chamber for the engine according to any one of the above [12] to [14], wherein the buffer bonding layer has a heat resistance of 10⁻⁶ m²K/W or more.
[16] An inner wall structure of a flow path, including, in members constituting a car, a heat-insulating member including a heat-insulating layer formed on an inner wall of the flow path through which an intake gas or an exhaust gas of an engine flows and a dense surface layer formed on the surface of the heat-insulating layer, wherein the heat-insulating layer includes ceramic and/or glass, and has pores of pore diameters of 10 to 500 nm and a porosity of 10 to 99%, and the dense surface layer includes ceramic and/or glass and has a porosity of 5% or less.
[17] The inner wall structure of the flow path according to the above [16], wherein the heat-insulating layer is a composite material including ceramic and/or glass as a matrix and hollow particles and/or porous particles as fillers, or a porous body made of a single material.
[18] The inner wall structure of the flow path according to the above [16] or [17], which includes a buffer bonding layer having a smaller thickness than the heat-insulating layer, between the inner wall of the flow path through which an intake gas or an exhaust gas of the engine flows and the heat-insulating layer and/or between the heat-insulating layer and the dense surface layer.

### Effect of the Invention

In an engine combustion chamber of a structure in which a heat-insulating layer having pore diameters and a porosity in predetermined ranges, a dense surface layer having a porosity in a predetermined range and the like are formed on the surface of an engine constituting member, a heat-insulating performance enhances and a fuel efficiency enhances.

The dense surface layer is a dense layer having a porosity of 5% or less, so that it is possible to reflect radiation and to inhibit absorption of a fuel or adhesion of cinders. Furthermore, the heat-insulating layer which is more porous than the dense surface layer is deposited under the dense surface layer, so that it is possible to inhibit heat transfer to the engine constituting member. Therefore, a durability of the engine constituting member constituting the engine combustion chamber also enhances.

Furthermore, a flow path through which an intake gas or an exhaust gas of an engine flows includes a heat-insulating member including two layers of a dense surface layer and a heat-insulating layer, which can enhance a heat-insulating effect.

### Brief Description of the Drawings

Fig. 1A is a schematic view showing Embodiment 1 of a heat-insulating member including a dense surface layer, a heat-insulating layer, and a buffer bonding layer;
Fig. 1B is a schematic view showing Embodiment 2 of the heat-insulating member including the dense surface layer, the heat-insulating layer, and the buffer bonding layer;
Fig. 1C is a schematic view showing Embodiment 3 of the heat-insulating member including the dense surface layer, the heat-insulating layer, and the buffer bonding layer; and
Fig. 2 is a schematic view showing an embodiment of an engine.

### Mode for Carrying out the Invention

Hereinafter, modes for carrying out the present invention will be described with reference to the drawings. The present invention is not limited to the following embodiments, and changes, modifications and improvements can be added without departing from the gist of the invention.

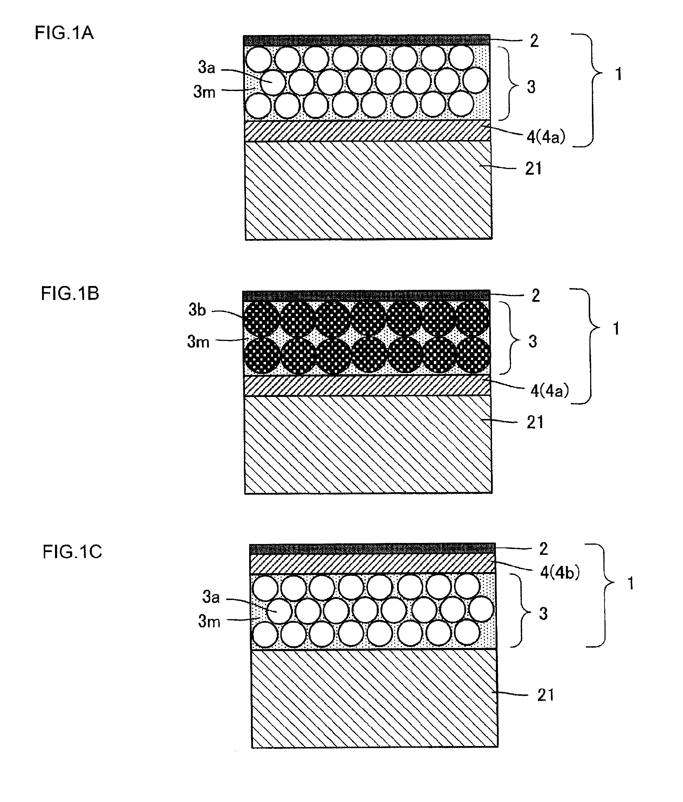

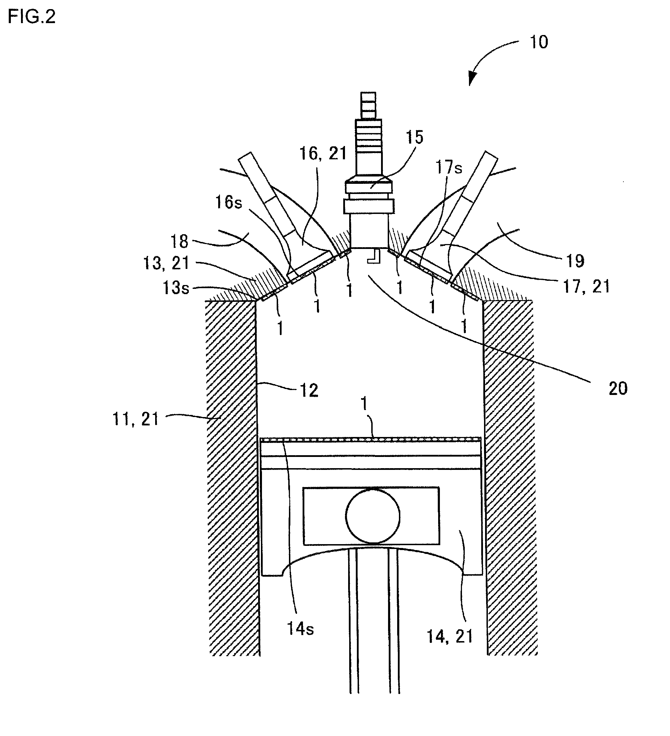

A structure of a combustion chamber for an engine and a heat-insulating member 1 of the present invention will be described with reference to Fig. 1A to Fig. 1C and Fig. 2. The structure of the combustion chamber for the engine of the present invention includes the heat-insulating member 1 including a heat-insulating layer 3 formed on the surface of an engine constituting member 21 constituting the engine combustion chamber and a dense surface layer 2 formed on the surface of the heat-insulating layer 3. Furthermore, the heat-insulating layer 3 includes ceramic and/or glass, and has pores of 10 to 500 nm and a porosity of 10 to 99%, and the dense surface layer 2 includes ceramic and/or glass and has a porosity of 5% or less. This constitution may include a buffer bonding layer 4 having a smaller thickness than the heat-insulating layer 3, between the engine constituting member 21 and the heat-insulating layer 3 and/or between the heat-insulating layer 3 and the dense surface layer 2.

The heat-insulating member 1 including the heat-insulating layer 3 and the dense surface layer 2 can enhance a heat-insulating performance of an engine combustion chamber 20. During combustion of a fuel in the engine combustion chamber 20, radiation is reflected by the dense surface layer 2, and during exhaust, heat can be radiated from the dense surface layer 2. Furthermore, the heat-insulating layer 3 can inhibit heat transfer from the dense surface layer 2 to the engine constituting member 21. In consequence, during the combustion of the fuel, a temperature of an inner wall of the engine constituting member 21 (a wall surface constituting the engine combustion chamber 20) easily rises following the gas temperature of the engine combustion chamber 20. Hereinafter, the respective layers will specifically be described.

### (Heat-Insulating Layer)

The heat-insulating layer 3 is a layer including ceramic and/or glass and having pores of pore diameters of 10 to 500 nm and a porosity of 10 to 99%. Furthermore, the porosity is larger than a porosity of the dense surface layer 2. The heat-insulating layer 3 is preferably a composite material including ceramic and/or glass as a matrix 3m and hollow particles 3a and/or porous particles 3b as fillers (see Fig. 1A to Fig. 1C). Alternatively, the heat-insulating layer 3 is preferably a porous body made of a single material.

When the heat-insulating layer 3 is made of the composite material, the heat-insulating layer preferably includes the hollow particles 3a and/or the porous particles 3b having pores of pore diameters of 10 to 500 nm, and also preferably includes the matrix 3m of ceramic and/or glass which bond these particles. Fig. 1A and Fig. 1C show embodiments in which the hollow particles 3a are used, and Fig. 1B shows an embodiment in which the porous particles 3b are used. The hollow particles 3a are particles in each of which one closed pore is present, and examples of the hollow particles include hollow glass beads, hollow ceramic beads, fly ash balloons, and hollow silica. Furthermore, the porous particles 3b are particles whose insides are porous, i.e., particles including pores other than the hollow particles, and examples of the porous particles include mesoporous silica, mesoporous titania, mesoporous zirconia, and shirasu balloons. The matrix is a component present around the hollow particles or the porous particles or between these particles, and the component bonds these particles to one another.

When the heat-insulating layer 3 includes the composite material, the heat-insulating layer includes ceramic and/or glass as the matrix 3m, and examples of a material of the matrix 3m include silica, alumina, zirconia, titania, silicon nitride, silicon oxynitride, silicon carbide, acid silicon carbide, and glass. These materials are preferably amorphous from the viewpoint of heat conductivity. The matrix 3m made of ceramic of the heat-insulating layer 3 is preferably an aggregate of fine particles having particle diameters of 500 nm or less.

The heat-insulating layer 3 is constituted of pores of a nano-order, or particles or crystal grains of the nano-order, so that it is possible to lower the heat conductivity. That is, as compared with a heat-insulating layer constituted of larger pores, particles or crystal grains, the porosity is lower, but the heat conductivity can be lowered. Therefore, even with the low heat conductivity, a ratio of deteriorating strength can be small.

Furthermore, when the heat-insulating layer 3 is made of the composite material, a porosity of the whole heat-insulating layer 3 is preferably from 10 to 99%, a porosity of the hollow particles 3a and/or the porous particles 3b is preferably from 30 to 99%, and the porosity of ceramic and/or glass as the matrix 3m is preferably from 0 to 70%.

As to the heat-insulating layer 3, the hollow particles or the porous particles are dispersed in an inorganic adhesive (an inorganic binder), an inorganic polymer, an oxide sol or the like, for example, cement, bentonite, aluminum phosphate, silica sol, alumna sol, boehmite sol, zirconia sol, titania sol, water glass (sodium silicate), tetramethyl orthosilicate, tetraethyl orthosilicate, polysilazane, polycarbosilane, polyvinyl silane, polymethyl silane, polysiloxane, polysilsesquioxane, geopolymer, or the like, to prepare a composition. This composition is applied onto the engine constituting member 21 onto which the buffer bonding layer 4 is applied, and subjected to a heat treatment, so that the heat-insulating layer can be formed.

When the heat-insulating layer 3 is made of the composite material, the composite material may include the material which becomes the matrix 3m as described above, together with the hollow particles 3a and/or the porous particles 3b as fillers. Furthermore, as the fillers, in addition to the above hollow particles and porous particles, fibrous particles, needle-like particles, plate-like particles or solid particles (spherical or agglomerated particles or the like) may be dispersed in the composite material.

When the heat-insulating layer 3 is the porous body made of the single material, examples of the porous body include a monolithic porous ceramic sintered body (a monolithic sintered body including porous ceramic), and a porous glass solid body. When the heat-insulating layer 3 is the porous body, the porous body preferably has a porosity of 10 to 99% and pore diameters of 500 nm or less.

In a cycle of suction, combustion, expansion, and exhaust of an engine 10 (see Fig. 2), it is necessary to ensure heat-insulating properties of the engine combustion chamber 20 during the combustion, and hence the heat-insulating layer 3 requires a thickness to such an extent that a heat-insulating effect can be obtained. However, when newly sucked air during the suction takes heat accumulated in the heat-insulating layer 3 to raise the gas temperature, a problem such as abnormal combustion may occur. Therefore, the heat-insulating layer 3 preferably has the thickness to such an extent that the heat-insulating effect can be obtained, and also preferably has a small heat capacity. Consequently, an excessively large thickness is unfavorable. In consequence, the thickness of the heat-insulating layer 3 is suitably in a range of 1 µm to 2 mm. When the thickness of the heat-insulating layer 3 is in this range, it is possible to inhibit the occurrence of a problem such as the abnormal combustion, while sufficiently acquiring the heat-insulating effect.

In the heat-insulating layer 3, the heat capacity is preferably 1500 kJ/(m³·K) or less and further preferably 1000 kJ/(m³·K) or less. Due to the low heat capacity, the gas temperature in the engine combustion chamber 20 can easily be lowered after the exhaust of the fuel. In consequence, it is possible to inhibit a problem such as the abnormal combustion.

In the heat-insulating layer 3, the heat conductivity is preferably 3 W/(m·K) or less, further preferably 1 W/(m·K) or less, and most preferably 0.5 W/(m·K) or less. Due to the low heat conductivity, it is possible to inhibit the heat transfer from the dense surface layer 2 to the engine constituting member 21.

### (Dense surface Layer)

The dense surface layer 2 is a layer formed on the surface of the heat-insulating layer 3 of a porous structure and including denser ceramic than the heat-insulating layer 3. In the dense surface layer 2, a porosity is 5% or less, preferably from 0.01 to 4%, and further preferably from 0.01 to 3%. In such a dense layer, the fuel is not easily absorbed, and soot and cinders are not easily adhered.

The material of the dense surface layer 2 is preferably a material similar to the heat-insulating layer 3, and further preferably a material of the same composition having a porosity of 5% or less. The dense surface layer 2 can be formed of ceramic, and examples of the material include alumina, silica, mullite, silicon nitride, silicon carbide, titania, zirconia, zinc oxide, and glass.

The dense surface layer 2 is constituted of a material which inhibits radiation heat transfer from combustion flame as a heat source during the combustion of the fuel. Furthermore, the dense surface layer 2 preferably easily radiates its own heat during the exhaust of the fuel. For this purpose, it is desirable to control a reflectance and a radiation rate in a wavelength region predicted from Wien's displacement law (λmT = 2898 [µm·K] where λm is a wavelength indicating a maximum radiation strength, and T indicates a temperature). That is, the reflectance is preferably large at a wavelength smaller than 2 µm, and the radiation rate is preferably large at a wavelength larger than 2 µm.

The dense surface layer 2 having the porosity of 5% or less can inhibit the radiation heat transfer to the inner wall constituting the engine combustion chamber in the earlier stage of the combustion immediately after the start of the combustion. Furthermore, in the later stage of the combustion to an exhaust step, the temperature lowers, and then the heat is radiated from the dense surface layer 2 to the exhaust gas, so that an intake gas to be next introduced can be prevented from reaching a high temperature.

In the dense surface layer 2, a reflectance at a wavelength of 2 µm is preferably larger than 0.5. When the dense surface layer has such a reflectance, it is possible to inhibit the conduction of the heat to the heat-insulating layer 3.

In the dense surface layer 2, a radiation rate at a wavelength of 2.5 µm is preferably larger than 0.5. Furthermore, when the dense surface layer has such a radiation rate, the heated dense surface layer 2 can easily cool down.

The dense surface layer 2 preferably has a smaller thickness, but the thickness is suitably in a range of 10 nm to 100 µm. When the thickness is in this range, it is possible to inhibit the conduction of the heat to the heat-insulating layer 3.

In the dense surface layer 2, a heat capacity is preferably 3000 kJ/(m³·K) or less and more preferably 2000 kJ/(m³·K) or less. Due to the low heat capacity (a thin membrane and a small volume), the temperature of the inner wall of the engine constituting member 21 easily follows the gas temperature in the engine combustion chamber 20. A temperature difference between the gas temperature and the heat-insulating member 1 (the dense surface layer 2) can be small, and a cooling loss can be reduced.

In the dense surface layer 2, a heat conductivity is preferably 3 W/(m·K) or less. When the heat conductivity is in this range, it is possible to inhibit the conduction of the heat to the heat-insulating layer 3.

### (Buffer Bonding Layer)

The buffer bonding layer 4 is a layer having a smaller thickness than the heat-insulating layer 3, between the engine constituting member 21 and the heat-insulating layer 3 and/or between the heat-insulating layer 3 and the dense surface layer 2. The buffer bonding layer 4 can eliminate mismatch of thermal expansion between both the layers in contact with this buffer bonding layer, and can inhibit peeling due to heat stress.

The buffer bonding layer 4 is preferably made of a material having a bonding function or a material which can be formed as a thin membrane. Examples of the buffer bonding layer 4 include layers made of an inorganic adhesive (an inorganic binder), a colloidal solution, an oxide sol, a pre-ceramic polymer (an inorganic polymer), a brazing material, and a plating membrane. Alternatively, the buffer bonding layer 4 may be a composite layer of a substance similar to the heat-insulating layer 3 with the above material. Furthermore, the separately prepared heat-insulating layer 3 can be bonded to the engine constituting member 21 or the like by the above material.

The structure of the combustion chamber for the engine preferably includes the buffer bonding layer 4 in an interface (a first interface) between the heat-insulating layer 3 having the pores of 10 to 500 nm and the porosity of 10 to 99% and the engine constituting member 21. Furthermore, the structure preferably includes the buffer bonding layer 4 in an interface (a second interface) between the heat-insulating layer 3 and a dense layer whose topmost surface has a porosity of 5% or less. Alternatively, the structure may include the buffer bonding layers 4 in both of the first interface and the second interface. Fig. 1A and Fig. 1B show the embodiments in each of which the buffer bonding layer 4 (a first buffer bonding layer 4a) is formed in the first interface. Furthermore, Fig. 1C shows the embodiment in which the buffer bonding layer 4 (a second buffer bonding layer 4b) is formed in the second interface.

The buffer bonding layer 4 preferably has a larger thermal expansion coefficient than one of the two adjacent layers, and has a smaller thermal expansion coefficient than the other adjacent layer. Furthermore, the buffer bonding layer 4 preferably has a smaller Young's modulus than the two adjacent layers. According to such a constitution, it is possible to inhibit the peeling due to the heat stress.

The buffer bonding layer 4 preferably has a large heat resistance, and specifically the heat resistance is preferably 10⁻⁶ m²K/W or more. Furthermore, the heat resistance is preferably from 10⁻⁶ to 10 m²K/W, more preferably from 10⁻⁵ to 10 m²K/W, and further preferably from 10⁻⁴ to 10 m²K/W. By the buffer bonding layer 4 formed in this manner, the heat-insulating effect can further sufficiently be obtained.

Furthermore, the buffer bonding layer 4 is preferably made of such a material composition as to inhibit a mutual reaction of the respective layers in contact, so that an oxidation resistance and a reaction resistance enhance, and a durability of the heat-insulating member enhances.

### (Arrangement of Heat-Insulating Members)

### 1. Engine Combustion Chamber

Next, an arrangement of the heat-insulating members 1 will be described. The heat-insulating members 1 are disposed on the surfaces (the inner walls) of the engine constituting members 21 constituting the engine combustion chamber 20. Specifically, examples of the surfaces include an upper surface 14s of a piston 14, valve heads 16s and 17s of a suction valve 16 and an exhaust valve 17, and a bottom surface 13s of a cylinder head 13.

Fig. 2 shows an embodiment of an engine. The engine 10 has a cylinder block 11 in which a cylinder 12 is formed, and the cylinder head 13 attached to cover the upper surface of the cylinder block 11. In the cylinder 12 of the cylinder block 11, the piston 14 is disposed slidably in an upward-downward direction.

An ignition plug 15 is installed to the cylinder head 13. Furthermore, the suction valve 16 and the exhaust valve 17 are installed, so that the suction valve 16 is constituted to open and close a suction passage 18 formed in the cylinder head 13, and the exhaust valve 17 is constituted to open and close an exhaust passage 19 formed in the cylinder head 13.

As shown in Fig. 2, the heat-insulating member 1 is disposed on the upper surface 14s of the piston 14. Furthermore, the heat-insulating members 1 are similarly disposed on the valve heads 16s and 17s of the suction valve 16 and the exhaust valve 17 and the bottom surface 13s of the cylinder head 13. These surfaces form the engine combustion chamber 20, and these surfaces are provided with the heat-insulating members 1, so that the heat-insulating performance is enhanced.

The suction valve 16 is opened to supply the fuel into the engine combustion chamber 20 surrounded by the cylinder 12, the cylinder head 13 and the piston 14, and the fuel is ignited by the ignition plug 15 and then combusted. By this combustion, the piston 14 is pressed downward. The exhaust gas generated by the combustion is exhausted by opening the exhaust valve 17.

### 2. Flow Path of Gas

The heat-insulating member 1 can be disposed on a portion other than the surfaces (the inner walls) of the engine constituting members 21 constituting the engine combustion chamber 20. For example, the heat-insulating member 1 can be disposed on an inner wall of a flow path through which the intake gas or the exhaust gas of the engine 10 flows, among members constituting a car.

Also when the heat-insulating member 1 is disposed on the inner wall of the flow path through which the intake gas or the exhaust gas flows, the heat-insulating layer 3 includes ceramic and/or glass, and has pores of pore diameters of 10 to 500 nm and a porosity of 10 to 99%, and the dense surface layer 2 includes ceramic and/or glass and has a porosity of 5% or less.

The heat-insulating layer 3 is preferably a composite material including ceramic and/or glass as a matrix and hollow particles and/or porous particles as fillers (see Fig. 1A to Fig. 1C). Alternatively, the heat-insulating layer is preferably a porous body made of a single material.

When the heat-insulating layer 3 is made of the composite material, the heat-insulating layer preferably includes the hollow particles and/or the porous particles having the pores of the pore diameters of 10 to 500 nm, a porosity of the hollow particles and/or the porous particles is preferably from 30 to 99%, and a porosity of the matrix of the heat-insulating layer 3 is preferably from 0 to 70%.

When the heat-insulating layer 3 is the porous body made of the single material, the porous body preferably has a porosity of 10 to 99% and pore diameters of 500 nm or less. The heat-insulating layer 3 preferably has a thickness of 1 µm to 2 mm, a heat capacity of 1500 kJ/ (m³·K) or less, and a heat conductivity of 3 W/ (m·K) or less.

Also when the heat-insulating member 1 is disposed on the inner wall of the flow path through which the intake gas or the exhaust gas flows, in the dense surface layer 2, a reflectance at a wavelength of 2 µm is preferably larger than 0.5, and a radiation rate at a wavelength of 2.5 µm is preferably larger than 0.5. Furthermore, the dense surface layer 2 preferably has a thickness of 10 nm to 100 µm.

The heat-insulating member preferably includes the buffer bonding layer 4 having a smaller thickness than the heat-insulating layer 3, between the inner wall of the flow path through which the intake gas or the exhaust gas of the engine 10 flows and the heat-insulating layer 3 and/or between the heat-insulating layer 3 and the dense surface layer 2. The buffer bonding layer 4 preferably has a larger thermal expansion coefficient than one of the two adjacent layers, a smaller thermal expansion coefficient than the other adjacent layer, and a smaller Young's modulus than the two adjacent layers. Furthermore, the buffer bonding layer 4 preferably has a heat resistance of 10⁻⁶ m²K/W or more.

Examples of the flow path through which the intake gas or the exhaust gas of the engine 10 of a car or the like flows and to which the heat-insulating member 1 is applied include a suction tube, an intake manifold, an exhaust manifold, an exhaust tube, a catalyst converter, and a muffler.

When the heat-insulating member 1 is disposed in the flow path on an intake side (the suction tube or the intake manifold), heat from the outside of the flow path is not transferred to the air in the flow path (the intake gas), so that it is possible to inhibit the rising of a temperature of the air flowing into the engine 10. In consequence, knocking does not easily occur, and as a result, enhancement of a fuel efficiency is achieved. When the heat-insulating member 1 is disposed in the flow path on an exhaust side (the exhaust manifold, the exhaust tube, or the catalyst converter), it is possible to inhibit the lowering of a temperature of the exhaust gas and to easily warm up the catalyst. Therefore, a purification performance of the exhaust gas enhances. Furthermore, when a turbo charger is mounted, exhaust energy enlarges, and hence the lowering of the exhaust energy can be inhibited. As a result, the enhancement of the fuel efficiency is achieved.

### (Manufacturing Method)

Next, a manufacturing method of the heat-insulating member 1 will be described.

When a constitution has the first buffer bonding layer 4a between the inner wall constituting the engine combustion chamber 20 (or the inner wall of the flow path) and the heat-insulating layer 3, a material which becomes the first buffer bonding layer 4a (e.g., an inorganic adhesive, a colloidal solution, a pre-ceramic polymer, or a brazing material) is applied onto the engine constituting member 21, or a membrane is formed by plating, and a heat-insulating layer 3 is formed thereon.

When a porous membrane of the heat-insulating layer 3 is formed, there can especially be used a method of forming the porous membrane such as, for example, an EB-PVD method, a thermal spraying method, a CVD method, or a heat treatment after wet coating. Furthermore, there may be used a method of forming the porous membrane in which particles are deposited by electrophoretic deposition, advection accumulation or the like and then the heat treatment is performed. Alternatively, a porous thin plate may separately be prepared and attached to a substrate by a bonding material. Furthermore, filler particles (preferably hollow) and a pore former may be added to a bonding agent and kneaded to obtain a paste, and the paste may be applied and hardened, or subjected to the heat treatment to form the heat-insulating layer 3. Furthermore, a composition in which hollow particles or porous particles are dispersed in an inorganic adhesive (an inorganic binder), an inorganic polymer, an oxide sol, water glass or the like may be applied onto the engine constituting member 21 onto the buffer bonding layer 4 is applied, and subjected to the heat treatment to form the heat-insulating layer 3.

When the constitution has the second buffer bonding layer 4b between the heat-insulating layer 3 and the dense surface layer 2, the second buffer bonding layer 4b is formed on the heat-insulating layer 3 in the same manner as for the first buffer bonding layer 4a, and on the second buffer bonding layer, the dense surface layer 2 is formed.

The dense surface layer 2 can be formed on the formed heat-insulating layer 3 (or the formed second buffer bonding layer 4b) by a sputtering method, a PVD method, an EB-PVD method, a CVD method, an AD method, thermal spraying, a plasma spraying method, a cold spraying method, plating, a heat treatment after wet coating, or the like. Alternatively, a dense thin plate may separately be prepared as the dense surface layer 2, and attached to the substrate together with the heat-insulating layer 3 and the like.

### Examples

Hereinafter, the present invention will be described in more detail on the basis of examples, but the present invention is not limited to these examples.

### <Example 1>

First, an alumina sol was applied onto a substrate of an Al (aluminum) alloy in place of an engine constituting member 21 and dried, and then an alumina membrane was formed as a buffer bonding layer 4 by a heat treatment of 500°C.

Next, a composition including a silica sol, water glass, silica particles (solid particles), silica hollow particles, a surfactant, a plasticizer and water was prepared, applied onto the buffer bonding layer 4 and dried, and then a porous siliceous membrane was formed as a heat-insulating layer 3 by a heat treatment of 500°C.

Finally, a composition including a silica sol, water glass, a plasticizer and water was prepared, applied onto the heat-insulating layer 3 and dried, and then a dense siliceous membrane was formed as a dense surface layer 2 by a heat treatment of 500°C.

The heat-insulating layer 3 of Example 1 included pores of 200 nm and had a porosity of 71%, and the heat-insulating layer 3 had a thickness of about 100 µm. Furthermore, the dense surface layer 2 had a thickness of about 200 nm and a porosity of 2%.

### <Example 2>

A buffer bonding layer 4 was formed on a substrate of an Al alloy in the same manner as in Example 1.

Next, a composition including a silica sol, water glass, silica particles (solid particles), porous silica particles, a surfactant, a plasticizer and water was prepared, applied onto the buffer bonding layer 4 and dried, and then a porous siliceous membrane was formed as a heat-insulating layer 3 by a heat treatment of 500°C.

Finally, a composition including a silica sol, water glass, a plasticizer and water was prepared, applied onto the heat-insulating layer 3 and dried, and then a dense siliceous membrane was formed as a dense surface layer 2 by a heat treatment of 500°C.

The heat-insulating layer 3 of Example 2 included pores of 20 nm and had a porosity of 68%, and the heat-insulating layer 3 had a thickness of about 100 µm. Furthermore, the dense surface layer 2 had a thickness of about 200 nm and a porosity of 2%.

### <Example 3>

A buffer bonding layer 4 was formed on a substrate of an Al alloy in the same manner as in Example 1.

Next, a composition including a silicone resin, aluminum chelate, a silane coupling agent, silica particles (solid particles), silica hollow particles and isopropyl alcohol was prepared, applied onto the buffer bonding layer 4 and dried, and then a porous siliceous membrane was formed as a heat-insulating layer 3 by a heat treatment of 300°C.

Finally, a composition including a silicone resin, aluminum chelate, a silane coupling agent and isopropyl alcohol was prepared, applied onto the heat-insulating layer 3 and dried, and then a dense siliceous membrane was formed as a dense surface layer 2 by a heat treatment of 300°C.

The heat-insulating layer 3 of Example 3 included pores of 200 nm and had a porosity of 70%, and the heat-insulating layer 3 had a thickness of about 100 µm. Furthermore, the dense surface layer 2 had a thickness of about 200 nm and a porosity of 2%.

### <Example 4>

A buffer bonding layer 4 was formed on a substrate of an Al alloy in the same manner as in Example 1.

Next, a composition including perhydropolysilazane, an amine-based catalyst, silica particles (solid particles), porous silica particles and xylene was prepared, applied onto the buffer bonding layer 4 and dried, and then a porous siliceous membrane was formed as a heat-insulating layer 3 by a heat treatment of 250°C.

Finally, a composition including perhydropolysilazane, an amine-based catalyst and xylene was prepared, applied onto the heat-insulating layer 3 and dried, and then a dense siliceous membrane was formed as a dense surface layer 2 by a heat treatment of 300°C.

The heat-insulating layer 3 of Example 4 included pores of 20 nm and had a porosity of 67%, and the heat-insulating layer 3 had a thickness of about 100 µm. Furthermore, the dense surface layer 2 had a thickness of about 100 nm and a porosity of 2%.

### <Example 5>

A composition including perhydropolysilazane, an amine-based catalyst, silica particles (solid particles), porous silica particles and xylene was prepared, directly applied onto a substrate of an Al alloy and dried, and then a porous siliceous membrane was formed as a heat-insulating layer 3 by a heat treatment of 250°C.

Finally, a composition including perhydropolysilazane, an amine-based catalyst and xylene was prepared, applied onto the heat-insulating layer 3 and dried, and then a dense siliceous membrane was formed as a dense surface layer 2 by a heat treatment of 300°C.

The heat-insulating layer 3 of Example 5 included pores of 20 nm and had a porosity of 69%, and the heat-insulating layer 3 had a thickness of about 100 µm. Furthermore, the dense surface layer 2 had a thickness of about 100 nm and a porosity of 2%.

### <Comparative Example 1>

Neither of buffer bonding layer 4, nor heat-insulating layer 3, nor a dense surface layer 2 was formed on a substrate of Al (aluminum) alloy as a substitute engine constituting member 21, but there was prepared an Al alloy as Comparative Example 1 which surface is left to be an Al alloy.

### <Comparative Example 2>

A buffer bonding layer 4 was formed on a substrate of an Al alloy in the same manner as in Example 1.

Next, a composition including a silica sol, water glass, silica particles (solid particles), a surfactant, a plasticizer and water was prepared, applied onto the buffer bonding layer 4 and dried, and then a siliceous membrane was formed as a heat-insulating layer 3 by a heat treatment of 500°C.

Finally, a composition including a silica sol, water glass, a plasticizer and water was prepared, applied onto the heat-insulating layer 3 and dried, and then a dense siliceous membrane was formed as a dense surface layer 2 by a heat treatment of 500°C.

The heat-insulating layer 3 of Comparative Example 2 hardly included pores and had a porosity of 5%, and the heat-insulating layer 3 had a thickness of about 100 µm. Furthermore, the dense surface layer 2 had a thickness of about 200 nm and a porosity of 2%.

### <Comparative Example 3>

A buffer bonding layer 4 was formed on a substrate of an Al alloy in the same manner as in Example 1.

Next, a composition including a silica sol, water glass, silica particles (solid particles), foamed resin (plastic balloons of particle diameters of about 50 µm), a surfactant, a plasticizer and water was prepared, applied onto the buffer bonding layer 4 and dried, and then a porous siliceous membrane was formed as a heat-insulating layer 3 by a heat treatment of 500°C.

Finally, a composition including a silica sol, water glass, a plasticizer and water was prepared, applied onto the heat-insulating layer 3 and dried, and then a dense siliceous membrane was formed as a dense surface layer 2 by a heat treatment of 500°C.

The heat-insulating layer 3 of Comparative Example 3 included pores of 50 µm and had a porosity of 70%, and the heat-insulating layer 3 had a thickness of about 100 µm. Furthermore, the dense surface layer 2 had a thickness of about 200 nm and a porosity of 2%.

### <Comparative Example 4>

A buffer bonding layer 4 was formed on a substrate of an Al alloy in the same manner as in Example 1.

Next, a composition including a silica sol, water glass, silica particles (solid particles), silica hollow particles, a surfactant, a plasticizer and water was prepared, applied onto the buffer bonding layer 4 and dried, and then a porous siliceous membrane was formed as a heat-insulating layer 3 by a heat treatment of 500°C.

Finally, a composition including a silica sol, water glass, latex particles (an average particle diameter of 50 nm), a plasticizer and water was prepared, applied onto the heat-insulating layer 3 and dried, and then a dense siliceous membrane was formed as a dense surface layer 2 by a heat treatment of 500°C.

The heat-insulating layer 3 of Comparative Example 4 included pores of 200 nm and had a porosity of 69%, and the heat-insulating layer 3 had a thickness of about 100 µm. Furthermore, the dense surface layer 2 had a thickness of about 200 nm and a porosity of 21%.

**[Table 1]**

| | Buffer bonding layer | | Heat-Insulating layer | | | | | Dense surface layer | | | | Heat flow rate |
|---|---|---|---|---|---|---|---|---|---|---|---|---|
| | Material | Heat treatment | Material | Heat treatment | Pore dia. | Porosity | Thickness | Material | Heat treatment | Porosity | Thickness | |
| Example 1 | Alumina | 500°C | Siliceous | 500°C | 200nm | 71% | 100µm | Siliceous | 500°C | 2% | 200nm | 90 |
| Example 2 | Alumina | 500°C | Siliceous | 500°C | 20nm | 68% | 100µm | Siliceous | 500°C | 2% | 200nm | 86 |
| Example 3 | Alumina | 500°C | Siliceous | 300°C | 200nm | 70% | 100µm | Siliceous | 300°C | 2% | 200nm | 88 |
| Example 4 | Alumina | 500°C | Siliceous | 250°C | 20nm | 67% | 100µm | Siliceous | 300°C | 2% | 100nm | 85 |
| Example 5 | - | - | Siliceous | 250°C | 20nm | 69% | 100µm | Siliceous | 300°C | 2% | 100nm | 86 |
| Comparative Example 1 | - | - | - | - | - | - | - | - | - | - | - | 100 |
| Comparative Example 2 | Alumina | 500°C | Siliceous | 500°C | - | 5% | 100µm | Siliceous | 500°C | 2% | 200nm | 96 |
| Comparative Example 3 | Alumina | 500°C | Siliceous | 500°C | 50µm | 70% | 100µm | Siliceous | 500°C | 2% | 200nm | 93 |
| Comparative Example 4 | Alumina | 500°C | Siliceous | 500°C | 200nm | 69% | 100µm | Siliceous | 500°C | 21% | 200nm | 93 |

### (Evaluation Method)

A heat-insulating performance in an aluminum alloy plate having the heat-insulating member 1 of a multilayer structure (the dense surface layer 2, the heat-insulating layer 3 and the buffer bonding layer(s) 4) on the surface thereof was evaluated as follows. Flame of a gas burner was brought close to the side of the heat-insulating member 1 of the aluminum alloy plate, a heat flow rate transferred to an opposite side of the aluminum alloy plate was measured, a heat flow rate of an aluminum alloy plate for comparison (without the heat-insulating member) was similarly measured, and these heat flow rates were compared.

Specifically, a heat flow meter was disposed on a side on which the heat-insulating member 1 was not disposed in the aluminum alloy plate (each of Examples 1 to 5) having the heat-insulating member 1 of the multilayer structure. Similarly, a heat flow meter was disposed in an aluminum alloy plate (Comparative Example 1) in which the heat-insulating member 1 for comparison was not formed and in each of examples (Comparative Examples 2 and 3) in which the heat-insulating layer 3 and the like did not satisfy predetermined conditions. At an equal distance from the flame of the one gas burner, the heat-insulating member 1 was disposed on the side of the flame of the gas burner, and a heat flow rate flowing through each member was measured.

The heat flow rates of Examples 1 to 5 and Comparative Examples 1 to 3 were compared. When the heat flow rate of Comparative Example 1 was 100, the heat flow rate of Example 1 was 90, the heat flow rate of Example 2 was 86, the heat flow rate of Example 3 was 88, the heat flow rate of Example 4 was 85, and the heat flow rate of Example 5 was 86. Furthermore, the Comparative Example 2 had a heat flow rate of 96 and had a larger heat flow rate than Example 1, and it has been found that when the silica particles are hollow as in Example 1, the heat-insulating performance is improved. Furthermore, Comparative Example 3 had a heat flow rate of 93 and had a larger heat flow rate than Example 1 or 2, and it has been found that even in the porous heat-insulating layer, the heat-insulating performance is improved when the heat-insulating layer has smaller pore diameters. Comparative Example 4 had a heat flow rate of 93, and it has been found that when the porosity of the dense surface layer 2 is high, the heat-insulating performance deteriorates. Furthermore, when the flame of the gas burner was repeatedly brought close or away in Example 4 and Example 5, it was found that Example 4 had an enhanced durability since Example 4 had the buffer bonding layer 4.

### Industrial Applicability

The structure of the combustion chamber for an engine of the present invention can be applied to an engine of a car or the like. Furthermore, the heat-insulating member of this structure can be applied also to an inner wall of a flow path through which an intake gas or an exhaust gas of the engine flows.

### Description of Reference Numerals

1: heat-insulating member, 2: dense surface layer, 3: heat-insulating layer, 3a: hollow particle, 3b: porous particle, 3m: matrix, 4: buffer bonding layer, 4a: first buffer bonding layer, 4b: second buffer bonding layer, 10: engine, 11: cylinder block, 12: cylinder, 13: cylinder head, 13s: bottom surface, 14: piston, 14s: upper surface, 15: ignition plug, 16: suction valve, 16s: valve head, 17: exhaust valve, 17s: valve head, 18: suction passage, 19: exhaust passage, 20: engine combustion chamber, and 21: engine constituting member.

## Claims

1. A structure of a combustion chamber for an engine, comprising:
a heat-insulating layer formed on the surface of an engine constituting member constituting the combustion chamber for the engine; and
a dense surface layer formed on the surface of the heat-insulating layer,
wherein the heat-insulating layer includes ceramic and/or glass, and has pores of pore diameters of 10 to 500 nm and a porosity of 10 to 99%, and
the dense surface layer includes ceramic and/or glass and has a porosity of 5% or less.

2. The structure of the combustion chamber for the engine according to claim 1,
wherein the heat-insulating layer is a composite material including ceramic and/or glass as a matrix and hollow particles and/or porous particles as fillers, or a porous body being comprised of a single material.

3. The structure of the combustion chamber for the engine according to claim 2,
wherein when the heat-insulating layer is comprised of the composite material, the heat-insulating layer includes hollow particles and/or porous particles having pores of pore diameters of 10 to 500 nm.

4. The structure of the combustion chamber for the engine according to claim 3,
wherein a porosity of the hollow particles and/or the porous particles is from 30 to 99%, and a porosity of the matrix of the heat-insulating layer is from 0 to 70%.

5. The structure of the combustion chamber for the engine according to claim 2,
wherein when the heat-insulating layer is the porous body comprised of the single material, the porous body has a porosity of 10 to 99% and pore diameters of 500 nm or less.

6. The structure of the combustion chamber for the engine according to any one of claims 1 to 5,
wherein the heat-insulating layer has a thickness of 1 µm to 2 mm.

7. The structure of the combustion chamber for the engine according to any one of claims 1 to 6,
wherein the heat-insulating layer has a heat capacity of 1500 kJ/(m³·K) or less.

8. The structure of the combustion chamber for the engine according to any one of claims 1 to 7,
wherein the heat-insulating layer has a heat conductivity of 3 W/(m·K) or less.

9. The structure of the combustion chamber for the engine according to any one of claims 1 to 8,
wherein in the dense surface layer, a reflectance at a wavelength of 2 µm is larger than 0.5.

10. The structure of the combustion chamber for the engine according to any one of claims 1 to 9,
wherein in the dense surface layer, a radiation rate at a wavelength of 2.5 µm is larger than 0.5.

11. The structure of the combustion chamber for the engine according to any one of claims 1 to 10,
wherein the dense surface layer has a thickness of 10 nm to 100 µm.

12. The structure of the combustion chamber for the engine according to any one of claims 1 to 11,
which comprises a buffer bonding layer having a smaller thickness than the heat-insulating layer, between the engine constituting member and the heat-insulating layer and/or between the heat-insulating layer and the dense surface layer.

13. The structure of the combustion chamber for the engine according to claim 12,
wherein the buffer bonding layer has a larger thermal expansion coefficient than one of two adjacent layers and has a smaller thermal expansion coefficient than the other adjacent layer.

14. The structure of the combustion chamber for the engine according to claim 12 or 13,
wherein the buffer bonding layer has a smaller Young's modulus than the two adjacent layers.

15. The structure of the combustion chamber for the engine according to any one of claims 12 to 14,
wherein the buffer bonding layer has a heat resistance of 10⁻⁶ m²K/W or more.

16. An inner wall structure of a flow path comprising, in members constituting a car,
a heat-insulating member including:
a heat-insulating layer formed on an inner wall of the flow path through which an intake gas or an exhaust gas of an engine flows, and
a dense surface layer formed on the surface of the heat-insulating layer,
wherein the heat-insulating layer includes ceramic and/or glass, and has pores of pore diameters of 10 to 500 nm and a porosity of 10 to 99%, and
the dense surface layer includes ceramic and/or glass and has a porosity of 5% or less.

17. The inner wall structure of the flow path according to claim 16,
wherein the heat-insulating layer is a composite material including ceramic and/or glass as a matrix and hollow particles and/or porous particles as fillers, or a porous body comprised of a single material.

18. The inner wall structure of the flow path according to claim 16 or 17,
which comprises a buffer bonding layer having a smaller thickness than the heat-insulating layer, between the inner wall of the flow path through which an intake gas or an exhaust gas of the engine flows and the heat-insulating layer and/or between the heat-insulating layer and the dense surface layer.
